# EUROPEAN PATENT APPLICATION

(11) **EP 1 742 201 A1**
(43) Date of publication of application: **10.01.2007**
(21) Application number: 05730641.7
(22) Date of filing: 15.04.2005
(51) Int. Cl.: G10K 11/172

(54) **POROUS SOUND ABSORBING STRUCTURE**

(30) Priority: 30.04.2004 JP 2004135145
(71) Applicant: KABUSHIKI KAISHA KOBE SEIKO SHO, Kobe-shi, Hyogo 651-8585 (JP)
(72) Inventor: YAMAGUCHI, Zenzo, Kobe Corp. Res. Lab. in K.K., Nishi-ku, Kobe-shi, Hyogo 6512271 (JP); TANAKA, Toshimitsu, Nishi-ku, Kobe-shi, Hyogo 6512271 (JP); YAMAGIWA, Ichiro, Nishi-ku, Kobe-shi, Hyogo 6512271 (JP); UEDA, Hiroki, Nishi-ku, Kobe-shi, Hyogo 6512271 (JP); HINO, Mitsuo, c/o Kobe Alcoa Transportation, Shinagawa-ku, Tokyo 1418688 (JP)
(74) Representative: TBK-Patent
(86) International application number: PCT/JP2005/007322
(87) International publication number: WO 2005/106840

(57) **Abstract**

A porous sound absorbing structure 10 includes an exterior plate 1 and a closing plate 2 in order to suppress a decrease in sound absorbing performance in a wide frequency band. An interior plate 3 is arranged between the exterior plate 1 and the closing plate 2, and air layers 4 and 5 are located between the exterior plate 1 and the interior plate 3 and between the interior plate 3 and the closing plate 2 respectively. The exterior plate 1, the interior plate 3, and the closing plate 2 are arranged while opposed to each other. Many through holes 1a and 3a are made in the exterior plate 1 and the closing plate 2 respectively. In the interior plate 3, a plate thickness t2 and a diameter φ2 and an aperture ratio β2 are set so as to generate an viscous effect in air passing through the through hole 3a. The aperture ratio β1 of the through hole 1a in the exterior plate 1 is set more than 3% and not more than 50%.

## Description

### TECHNICAL FIELD

The present invention relates to a porous sound absorbing structure which reduces sound from a noise emitting source.

### BACKGROUND ART

Recently, a porous soundproof structure is becoming operational in various fields. In the porous soundproof structure, a plate member in which a hole is not made and a plate member in which many through holes are made over a surface are arranged on an outside and an inside with respect to a sound source while opposed to each other through an air layer, and thereby a Helmholtz resonance principle is utilized to perform noise control. When the Helmholtz resonance principle is utilized, for example, a relationship of a general formula f=(c/2π)×∫{β/(t+1.6φ)d} holds, where f is a resonance frequency, c is sound velocity, β is an aperture ratio, t is a plate thickness of the inside plate, φ is a diameter of the through hole, and d is an air layer thickness. Air in the portion of the through hole is drastically vibrated to the sound having a resonance frequency, and the sound having the resonance frequency is absorbed by friction. Therefore, the noise having a particular resonance frequency can efficiently be decreased.

However, when the Helmholtz resonance principle is used, there is a problem that a soundproof effect is exerted only to the sound having the particular resonance frequency while the soundproof effect is extremely lowered to the sounds having frequencies except for the resonance frequency. In order to solve the problem, there is known a porous soundproof structure in which a sound absorbing band is widened by providing plural interior plates through the air layers. The interior plate becomes the sound absorbing plate, and many through holes (micro holes) are made in the interior plate. This enables the noises having the frequencies including the particular resonance frequency to be absorbed, because the sound absorbing band is widened.

However, in the porous soundproof structure, the interior plate is exposed on a sound source side, and the diameter of the through hole is extremely small, so that sometimes clogging is generated in the through hole. Furthermore, sometimes the diameter of the through hole cannot be decreased due to constraints from other functions (drainage, painting, and the like). Thus, because the size of the through hole diameter is subject to the restraint, there is a problem that the frequency band in which the sound absorbing performance can be exerted becomes narrowed.

An object of the present invention is to provide a porous sound absorbing structure which can sufficiently exert the sound absorbing performance in the wide frequency band.

### DISCLOSURE OF THE INVENTION

A porous sound absorbing structure according to one aspect of the present invention is a porous sound absorbing structure in which a first outside member and at least one inside member are arranged while opposed to each other, many through holes being made along a flat plane in the inside member, and a plate thickness of the inside member and a diameter and an aperture ratio of the through hole are set so as to generate an viscous effect in air passing through the through hole. In the porous sound absorbing structure, a second outside member is arranged while opposed to the inside member, the second outside member being located on the side opposite to the first outside member with respect to the inside member, many through holes being made along the flat plane in the second outside member, and the aperture ratio of the through hole in the second outside member is more than 3% and not more than 50% (claim 1).

According to the porous sound absorbing structure according to the present invention, the aperture ratio of the second outside member exceeds 3%, which promotes the conversion of the air vibration into the heat energy by the viscous effect of the through hole in the inside member, and the sufficient sound absorbing performance can be exerted in the wide frequency band. Additionally, because the aperture ratio of the second outside member becomes not more than 50%, the rigidity of the second outside member can be secured to some extent.

### BRIEF DESCRIPTION OF THE DRAWINGS

Fig. 1 is a transverse sectional view showing a porous sound absorbing structure according to a first embodiment of the present invention;
Fig. 2 is a graph showing a relationship between an acoustic absorption coefficient and an aperture ratio of an exterior plate in the porous sound absorbing structure according to the first embodiment of the present invention;
Fig. 3 is a graph showing sound absorbing characteristics in the porous sound absorbing structure according to the first embodiment of the present invention;
Fig. 4 is a graph showing the sound absorbing characteristics in the porous sound absorbing structure according to the first embodiment of the present invention;
Fig. 5 is a graph showing the sound absorbing characteristics in the porous sound absorbing structure according to the first embodiment of the present invention;
Fig. 6 is a graph showing the sound absorbing characteristics in the porous sound absorbing structure according to the first embodiment of the present invention;
Fig. 7 is a transverse sectional view showing a porous sound absorbing structure according to a second embodiment of the present invention;
Fig. 8 is a transverse sectional view showing a porous sound absorbing structure according to a third embodiment of the present invention;
Fig. 9 is a transverse sectional view showing a porous sound absorbing structure according to a fourth embodiment of the present invention;
Fig. 10 is a transverse sectional view showing a porous sound absorbing structure according to a fifth embodiment of the present invention;
Fig. 11 is an explanatory view showing a state in which irregularity is formed in an exterior plate 1;
Fig. 12 is an explanatory view showing a state in which the irregularity is formed in an interior plate 3;
Fig. 13 is an explanatory view showing a state in which the irregularity is formed in the exterior plate 1 and the interior plate 3;
Fig. 14 is an explanatory view showing a state in which a corrugated irregularity is formed in the interior plate 3;
Fig. 15 is an explanatory view showing a state in which an outside rib and an inside rib are provided in the exterior plate 1 and the interior plate 3 and the irregularities are formed in the exterior plate 1 and the interior plate 3;
Fig. 16 is an explanatory view showing a state in which the corrugated irregularity is formed in the interior plate 3 and the emboss is provided in the exterior plate while the irregularity is formed in the exterior plate; and
Fig. 17 is an explanatory view showing a state in which the irregularities are formed in the exterior plate and the interior plate when the interior plate is inclined.

### BEST MODE FOR CARRYING OUT THE INVENTION

A porous sound absorbing structure according to another aspect of the present invention is a porous sound absorbing structure in which a first outside member and at least one inside member are arranged while opposed to each other, many through holes being made along a flat plane in the inside member, and a plate thickness of the inside member and a diameter and an aperture ratio of the through hole are set so as to generate an viscous effect in air passing through the through hole. In the porous sound absorbing structure, a second outside member is arranged while opposed to the inside member, the second outside member being located on the side opposite to the first outside member with respect to the inside member, many through holes being made along the flat plane in the second outside member, and the diameter of the through hole in the second outside member exceeds 3 mm (claim 2).

A porous sound absorbing structure according to another aspect of the present invention is a porous sound absorbing structure which includes a first outside member; a second outside member which is arranged while opposed to the first outside member, many through holes being made along a flat plane in the second outside member; and at least one inside member which is arranged while opposed to the first outside member and the second outside member such that the inside member is located between the first outside member and the second outside member, many through holes being made along the flat plane in the second outside member. In the porous sound absorbing structure, a plate thickness of the inside member and a diameter and an aperture ratio of the through hole are set so as to generate an viscous effect in air passing through the through hole, and the aperture ratio of the through hole in the second outside member is more than 3% and not more than 50% (claim 4).

A porous sound absorbing structure according to another aspect of the present invention is a porous sound absorbing structure which includes a first outside member; a second outside member which is arranged while opposed to the first outside member, many through holes being made along a flat plane in the second outside member; and at least one inside member which is arranged while opposed to the first outside member and the second outside member such that the inside member is located between the first outside member and the second outside member, many through holes being made along the flat plane in the second outside member. In the porous sound absorbing structure, a plate thickness of the inside member and a diameter and an aperture ratio of the through hole are set so as to generate an viscous effect in air passing through the through hole, and the diameter of the through hole in the second outside member exceeds 3 mm (claim 5).

According to the porous sound absorbing structure of the present invention, the aperture ratio of the second outside member exceeds 3%, which promotes the conversion of the air vibration into the heat energy by the viscous effect of the through hole in the inside member, and the sufficient sound absorbing performance can be exerted in the wide frequency band. Because the aperture ratio of the second outside member becomes not more than 50%, the rigidity of the second outside member can be secured to some extent. Because the diameter of the through hole in the second outside member exceeds 3 mm, the diameter of the second outside member can relatively be increased such that the clogging is not generated in the through hole and such that the constraints due to other functions (drainage and painting) can sufficiently be satisfied. Therefore, the sound absorbing performance can be maintained in the inside member arranged inside the second outside member.

A porous sound absorbing structure according to another aspect of the present invention is a porous sound absorbing structure in which a first outside member and at least one inside member are arranged while opposed to each other, many through holes being made along a flat plane in the inside member, and a plate thickness of the inside member and a diameter and an aperture ratio of the through hole are set so as to generate an viscous effect in air passing through the through hole. In the porous sound absorbing structure, a second outside member is arranged while opposed to the inside member, the second outside member being located on the side opposite to the first outside member with respect to the inside member, many through holes being made along the flat plane in the second outside member, the aperture ratio of the through hole in the second outside member is more than 3% and not more than 50%, and the diameter of the through hole in the second outside member exceeds 3 mm (claim 3).

A porous sound absorbing structure according to another aspect of the present invention is a porous sound absorbing structure which includes a first outside member; a second outside member which is arranged while opposed to the first outside member, many through holes being made along a flat plane in the second outside member; and at least one inside member which is arranged while opposed to the first outside member and the second outside member such that the inside member is located between the first outside member and the second outside member, many through holes being made along the flat plane in the second outside member. In the porous sound absorbing structure, a plate thickness of the inside member and a diameter and an aperture ratio of the through hole are set so as to generate an viscous effect in air passing through the through hole, the aperture ratio of the through hole in the second outside member is more than 3% and not more than 50%, and the diameter of the through hole in the second outside member exceeds 3 mm (claim 6).

According to the porous sound absorbing structure of the present invention, because the diameter of the through hole in the second outside member exceeds 3 mm, which promotes the conversion of the air vibration into the heat energy by the viscous effect of the through hole in the inside member, and the sufficient sound absorbing performance can be exerted in the wide frequency band even in an environment in which the diameter of the through hole in the second outside member cannot relatively be decreased. Because the aperture ratio of the second outside member becomes not more than 50%, the rigidity of the second outside member can be secured to some extent.

In the present invention, it is preferable that the aperture ratio of the through hole in the inside member is not more than 3% (claim 7). Therefore, while the inside member has the sufficient sound absorbing performance, the number of through holes is decreased in the inside member, so that a production time of the inside member can be shortened to reduce production cost.

In the present invention, it is preferable that the diameter of the through hole in the inside member be not more than 3 mm (claim 8). This enables the rapid decrease in acoustic absorption coefficient to be suppressed. Accordingly, the frequency band of the absorbed noise can further be widened.

In the present invention, it is preferable that air layers be formed between the first outside member and the inside member and between the inside member and the second outside member respectively and a sound absorbing material be arranged in at least one of the air layers (claim 9). This enables the sound absorbing performance to be improved. Glass wool, metal fiber, a foam metal and resin metal thin film or a metal thin film, non-oven cloth, and the like can be utilized as the sound absorbing material.

In the present invention, it is preferable that air layers be formed between the first outside member and the inside member and between the inside member and the second outside member respectively, a sound absorbing material made of a resin of metal thin film be arranged in at least one of the air layers, many through holes being made in the sound absorbing material, the aperture ratio of the through hole of the thin film be not more than 3%, and the diameter of the through hole of the thin film be not more than 3 mm (claim 10). Therefore the sound absorbing performance is further improved.

In the present invention, it is preferable that at least one of the second outside member and the inside member be inclined with respect to a horizontal plane (claim 11).

Thus, water can effectively be collected and drained. Additionally, the painting can effectively be collected and discharged when the porous sound absorbing structure is coated with paint. As a result, the decrease in sound absorbing material can further be suppressed in the multi-hole plate.

In the present invention, it is preferable that a drain hole be made in a lower portion of at least one of the second outside member and the inside member (claim 12).

Even in the above configuration, the water can effectively be collected and drained. Additionally, the painting can effectively be collected and discharged when the porous sound absorbing structure is coated with paint. As a result, the decrease in sound absorbing material can further be suppressed in the multi-hole plate.

In the present invention, it is preferable that the inside member be made of a water-repellent material containing at least one of silicon and fluorine or a surface of the inside member be coated with a water-repellent material containing at least one of silicon and fluorine (claim 13).

Therefore, even if rainwater or the like reaches the interior member, the rainwater or the like is effectively removed from the surroundings of the through hole, so that the rainwater or the like can be prevented from adhering to the surroundings of the through hole. As a result, the clogging can further be suppressed in the through hole.

In the present invention, it is preferable that at least one of the first outside member, the second outside member, and the inside member be formed so as to have an irregular shape (claim 14).

Therefore, at least one of the members is formed so as to have the irregular shape, which allows the rigidity of the member to be enhanced. When the air layer is provided between the first outside member and the inside member or between the second outside member and the inside member like claims 9 and 10, the air layer can be formed by overlapping the member, formed so as to have the irregular shape, and other member to each other.

Preferred embodiments of the present invention will be described below with reference to the drawings.

### [First Embodiment]

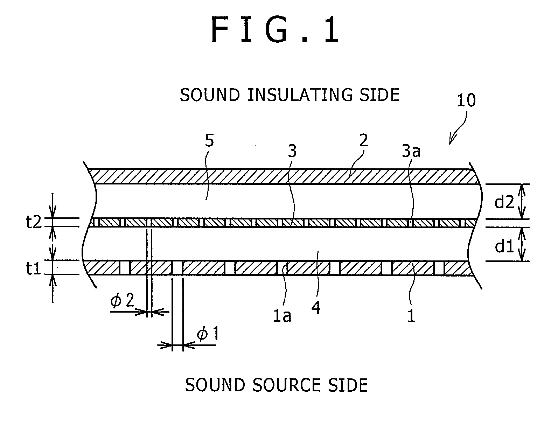

Fig. 1 is a transverse sectional view showing a porous sound absorbing structure according to a first embodiment of the present invention. As shown in Fig. 1, a porous sound absorbing structure 10 according to the first embodiment includes an exterior plate (second outside member) 1, a closing plate (first outside member) 2, and an interior plate (inside member) 3. The exterior plate 1 is arranged on the sound source side, the closing plate 2 is arranged on the sound insulating side, and the interior plate 3 is arranged between the exterior plate 1 and the closing plate 2. An air layer 4 is located between the interior plate 3 and the exterior plate 1, and an air layer 5 is located between the interior plate 3 and closing plate 2. The exterior plate 1, the closing plate 2, and the interior plate 3 are made of a metal such as iron and aluminum, a synthetic resin, a fiber reinforced material, and the like. Desirably the exterior plate 1, the closing plate 2, and the interior plate 3 are made of the same material because a separation process is eliminated in recycling.

The exterior plate 1 is arranged while opposed to the interior plate 3, and the interior plate 3 is arranged while opposed to the closing plate 2. That is, the porous sound absorbing structure 10 is formed while the exterior plate 1, the interior plate 3, and the closing plate 2 are opposed to each other. Many circular through holes 1a and 3a are made in the exterior plate 1 and the interior plate 3 respectively, and the through hole 1a of the exterior plate 1 is slightly larger than the through hole 3a of the interior plate 3 in a diameter. Parameters including layer thicknesses d1 and d2 of the air layers 4 and 5, aperture ratios β1, and β2 (area ratios) of the exterior plate 1 and interior plate 3, plate thicknesses t1 and t2, and diameters φ1 and φ2 of the through holes 1a and 3a are set so as to generate a viscous effect to air passing through the through holes 1a and 3a of the exterior plate 1 and interior plate 3. Thus, because the air vibration is converted into heat energy by generating a viscous damping effect in the air passing through the through holes 1a and 3a, a damping property is generated in the air vibration. As a result, the high sound absorbing effect can be exerted in the relatively wide frequency band. Accordingly, the porous sound absorbing structure according to a first embodiment can deal with the noise having the frequency components except for the resonance frequency.

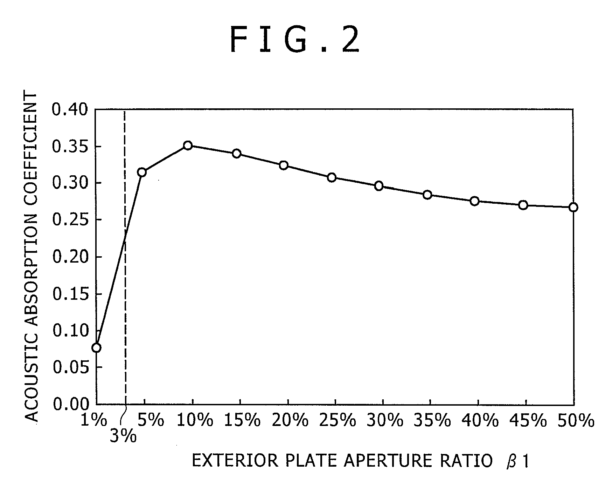

Preferably the aperture ratio β1 of the through hole 1a in the exterior plate 1 is more than 3% and not more than 50%. This is attributed to an experimental result (see Fig. 2) that, in the above range, the aperture ratio β1 is brought close to or becomes larger than the acoustic absorption coefficient of 0.3 in which the sufficient sound absorbing effect is obtained. Fig. 2 is a graph showing a relationship between the acoustic absorption coefficient and the aperture ratio β1 of the exterior plate 1 in the porous sound absorbing structure 10 according to the first embodiment of the present invention. As shown in Fig. 2, when the aperture ratio β1 of the through hole 1a of the exterior plate 1 is about 5% exceeding 3%, the acoustic absorption coefficient becomes about 0.3. When the aperture ratio β1 is 10%, the acoustic absorption coefficient becomes 0.35. The acoustic absorption coefficient is gradually decreased when the aperture ratio β1 exceeds 10%, and the sound absorbing effect becomes 0.27 when the aperture ratio β1 is 50%. As can be seen from Fig. 2, from the viewpoint of acoustic absorption coefficient, not only the aperture ratio β1 of the exterior plate 1 is simply decreased while exceeding 3%, but also preferably the aperture ratio β1 is optimized in the range of 5% to 28% where the acoustic absorption coefficient becomes 0.3 or more in which the sufficient sound absorbing effect is obtained. More preferably the aperture ratio β1 is optimized in the range of 7% to 20% where the acoustic absorption coefficient becomes 0.33 or more. However, when the aperture ratio β1 is 3% or less, because the acoustic absorption coefficient is decreased such that the acoustic absorption coefficient is brought close to 0.2 or becomes 0.2 or less, the desired sound absorbing effect cannot be expected. When the aperture ratio β1 exceeds 50%, an aperture area of the exterior plate 1 is excessively increased, which leads to the decrease in rigidity.

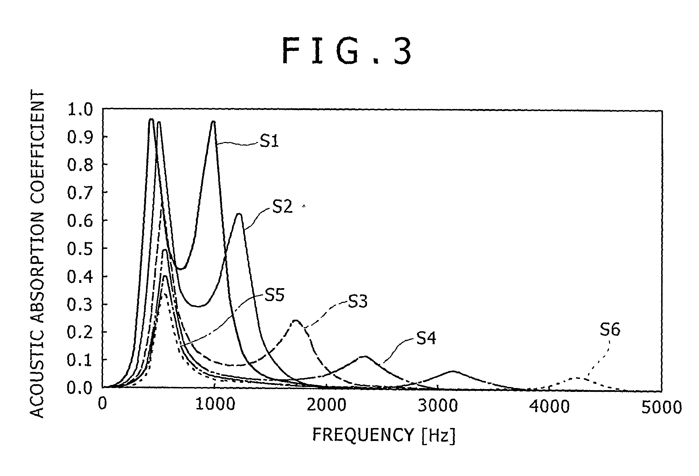

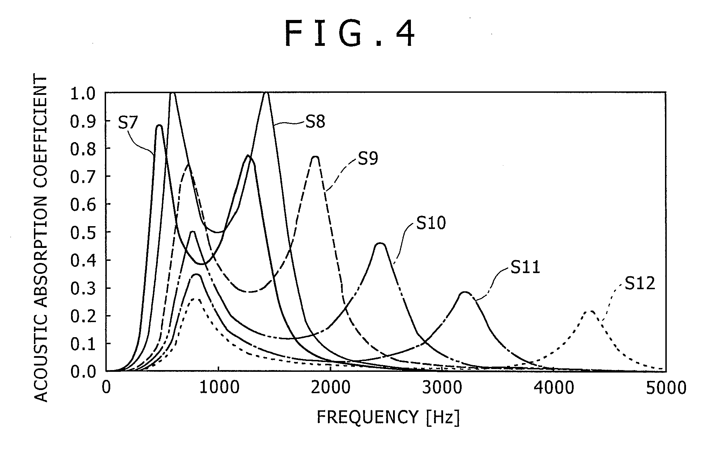

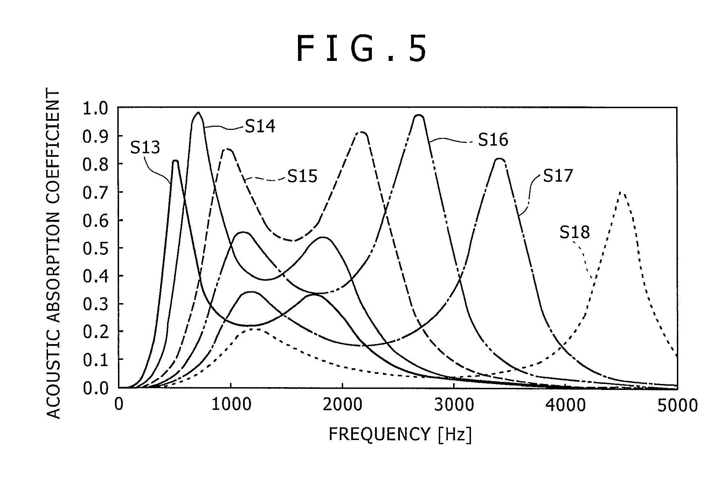

Fig. 3 is a graph showing sound absorbing characteristics in the porous sound absorbing structure according to the first embodiment of the present invention, and Fig. 3 shows the sound absorbing characteristics when the aperture ratio β2 of the interior plate 3 is changed in the range of 0.1% to 5.0% while the aperture ratio β1 of the exterior plate 1 is maintained at 2.5%. Fig. 4 is a graph showing the sound absorbing characteristics in the porous sound absorbing structure according to the first embodiment of the present invention, and Fig. 4 shows the sound absorbing characteristics when the aperture ratio β2 of the interior plate 3 is changed in the range of 0.1% to 5.0% while the aperture ratio β1 of the exterior plate 1 is maintained at 5%. Fig. 5 is a graph showing the sound absorbing characteristics in the porous sound absorbing structure according to the first embodiment of the present invention, and Fig. 5 shows the sound absorbing characteristics when the aperture ratio β2 of the interior plate 3 is changed in the range of 0.1% to 5.0% while the aperture ratio β1 of the exterior plate 1 is maintained at 10.0%. Table 1 shows conditions of experimental numbers S1 to S18 shown in Figs. 3 to 5.

**[Table 1]**

| Experimental number | Exterior plate | | | | Interior plate | | | |
|---|---|---|---|---|---|---|---|---|
| | Plate thickness t1 (mm) | Diameter of through hole φ1 (mm) | Aperture β1 (%) | Air layer thickness d1 (mm) | Plate thickness t2 (mm) | Diameter of through hole φ2 (mm) | Aperture β2 (%) | Air layer thickness d2 (mm) |
| S1 | 1.5 | 10.0 | 2.5 | 15 | 0.3 | 0.5 | 0.1 | 15 |
| S2 | * | * | * | * | * | * | 0.2 | * |
| S3 | * | * | * | * | * | * | 0.5 | * |
| S4 | * | * | * | * | * | * | 1.0 | * |
| S5 | * | * | * | * | * | * | 2.0 | * |
| S6 | * | * | * | * | * | * | 5.0 | * |
| S7 | * | * | 5.0 | * | * | * | 0.1 | * |
| S8 | * | * | * | * | * | * | 0.2 | * |
| S9 | * | * | * | * | * | * | 0.5 | * |
| S10 | * | * | * | * | * | * | 1.0 | * |
| S11 | * | * | * | * | * | * | 2.0 | * |
| S12 | * | * | * | * | * | * | 5.0 | * |
| S13 | * | * | 10.0 | * | * | * | 0.1 | * |
| S14 | * | * | * | * | * | * | 0.2 | * |
| S15 | * | * | * | * | * | * | 0.5 | * |
| S16 | * | * | * | * | * | * | 1.0 | * |
| S17 | * | * | * | * | * | * | 2.0 | * |
| S18 | * | * | * | * | * | * | 5.0 | * |

| | | | | | | | | |
|---|---|---|---|---|---|---|---|---|
| * denotes ditto | | | | | | | | |

On the conditions of the aperture ratios β1 of the exterior plate 1 of 2.5%, 5.0%, and 10.0%, when the aperture ratios β2 of the interior plate 3 is changed to 0.1%, 0.2%, 0.5%, 1.0%, 2.0%, and 5.0% as shown in Table 1, it is found that the frequency band of the noise absorbed by the porous sound absorbing structure 10 is widened as the aperture ratio β1 of the exterior plate 1 is increased as shown in Figs. 3 to 5. That is, when the aperture ratio β1 of the exterior plate 1 is increased from 2.5% to 5% and 10.0% in the experimental number S1 like the experimental numbers S7 and S13, the frequency band of the absorbed noise is widened, and the noise having the wide frequency band can be absorbed. Similarly, when the aperture ratio β1 of the exterior plate 1 is increased from 2.5% to 5% and 10.0% in the experimental numbers S2 to S6 like the experimental numbers S8 to S12 and S 14 to S 18, the frequency band of the absorbed noise is widened, and the noise having the wide frequency band can be absorbed. From the experimental results shown in Figs. 3 to 5, in the porous sound absorbing structure 10, it is found that the frequency band of the absorbed noise is widened when the aperture ratio β1 of the exterior plate 1 exceeds 3%. Accordingly, when the aperture ratio β1 of the exterior plate 1 is set more than 3% and not more than 50%, the porous sound absorbing structure 10 sufficiently has the sound absorbing performance while the frequency band of the absorbed noise is widened, and the porous sound absorbing structure 10 secures the rigidity of the exterior plate 1 to some extent. The rigidity of the exterior plate 1 is increased as the aperture ratio β1 of the exterior plate 1 is decreased.

Preferably the diameter φ1 of the through hole 1a in the exterior plate 1 is more than 3 mm. This is because that the through hole 1a is clogged in the actual use when the diameter φ1 of the through hole 1a in the exterior plate 1 is not more than 3 mm. Further, sometimes the diameter φ1 of the through hole 1a in the exterior plate 1 cannot be made not more than 3 mm due to constraints such as drainage and painting which are of other functions of the exterior plate 1. Accordingly, when the diameter φ1 of the through hole 1a in the exterior plate 1 exceeds 3 mm, the above problems can be avoided.

Preferably the aperture ratio β2 of the through hole 3a in the interior plate 3 is not more than 3%. As shown in Figs. 4 and 5, when the aperture ratio β2 of the interior plate 3 is more than 3%, namely, in the case of the experimental numbers S12 and S18, the acoustic absorption coefficient becomes not more than 0.3, so that the insufficient sound absorbing effect is obtained. On the contrary, when the aperture ratio β2 of the interior plate 3 is not more than 3%, namely, in the case of the experimental numbers S7 to S11 and S 13 to S17, the acoustic absorption coefficient near a particular resonance frequency becomes not lower than 0.3, so that the noise can sufficiently be absorbed.

On the other hand, in Fig. 3, the acoustic absorption coefficient exceeds 0.3 in any one of experimental numbers S1 to S6. However, because the aperture ratio β1 of the exterior plate 1 becomes not more than 3%, the frequency band of the absorbed noise is narrowed (that is, a width near the particular resonance frequency band is narrowed).

Thus, as shown in Figs. 4 and 5, when the aperture ratio β1 of the exterior plate 1 exceeds 3% while the aperture ratio β2 of the through hole 3a in the interior plate 3 becomes not more than 2%, the acoustic absorption coefficient near the particular resonance frequency band exceeds 0.3 in the experimental numbers S7 to 11 and S 13 to S17. From the results shown in Figs. 4 and 5, in the porous sound absorbing structure 10, the aperture ratio β2 of the interior plate 3 is set not more than 3%, which allows the acoustic absorption coefficient not lower than 0.3 to be obtained while the frequency band of the absorbed noise is widened. When the aperture ratio β2 becomes not more than 3%, because the number of through holes 3a can be decreased, the production time of the interior plate 3 can be shortened to reduce the production cost of the porous sound absorbing structure 10.

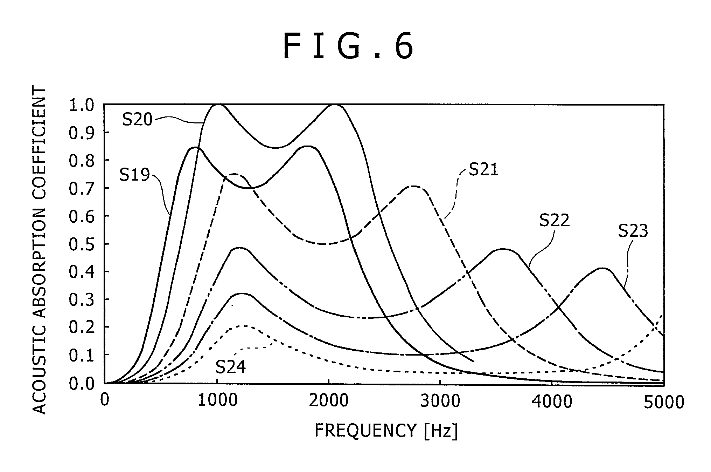

Preferably the diameter φ2 of the through hole 3a in the interior plate 3 is not more than 3 mm. This is attributed to the experimental result (see Fig. 6) that, when the diameter φ2 of the through hole 3a is smaller, the rapid decrease in acoustic absorption coefficient can be suppressed while the frequency band of the absorbed noise is widened. Fig. 6 is a graph showing the sound absorbing characteristics in the porous sound absorbing structure according to the first embodiment of the present invention, and Fig. 6 shows the sound absorbing characteristics when the aperture ratio β2 of the interior plate 3 is changed in the range of 0.1% to 5.0% while the aperture ratio β1 of the exterior plate 1 is maintained at 10% and, at the same time, when the diameter φ2 of the through hole 3a is maintained at 0.2 mm. Table 2 shows conditions of experimental numbers S 19 to S24 shown in Fig. 6.

**[Table 2]**

| Experimental number | Exterior plate | | | | Interior plate | | | |
|---|---|---|---|---|---|---|---|---|
| | Plate thickness t1 (mm) | Diameter of through hole φ1 (mm) | | Plate thickness t1 (mm) | Diameter of through hole φ1 (mm) | | Plate thickness t1 (mm) | Diameter of through hole φ1 (mm) |
| S19 | 1.5 | 10.0 | 10.0 | 15 | 0.1 | 0.2 | 0.1 | 15 |
| S20 | * | * | * | * | * | * | 0.2 | * |
| S21 | * | * | * | * | * | * | 0.5 | * |
| S22 | * | * | * | * | * | * | 1.0 | * |
| S23 | * | * | * | * | * | * | 2.0 | * |
| S24 | * | * | * | * | * | * | 5.0 | * |

| | | | | | | | | |
|---|---|---|---|---|---|---|---|---|
| * denotes ditto. | | | | | | | | |

As shown in Table 2, in the conditions of experimental numbers S19 to S24 of Fig. 6, the plate thickness t2 of 0.3 mm of the interior plate 3 in the conditions of the experimental number S13 to S18 of Fig. 5 is changed to 0.1 mm, and the diameter of 0.5 mm of the through hole 3a is changed to 0.2 mm. In the experimental numbers S19 to S24, the rapid decrease in acoustic absorption coefficient is suppressed on the above conditions as shown in Fig. 6. That is, from the comparison of Figs. 5 and 6, the rapid decrease in acoustic absorption coefficient can be prevented by decreasing the diameter φ2 of the through hole 3a. Preferably, when the diameter φ2 of the through hole 3a is set not more than 3 mm, the rapid decrease in acoustic absorption coefficient shown in Fig. 5 can be prevented. Therefore, in the porous sound absorbing structure 10, the frequency band of the absorbed noise can be widened while the rapid decrease in acoustic absorption coefficient is suppressed.

Thus, the porous sound absorbing structure 10 of the first embodiment is formed such that the aperture ratio β1 of the exterior plate 1 exceeds 3%. Therefore, the conversion of the air vibration into the heat energy is promoted by the viscous damping effect of the through hole 3a in the interior plate 3, and the sound absorbing performance can sufficiently be exerted in the wide frequency band. The porous sound absorbing structure 10 of the first embodiment is formed such that the diameter φ1 of the through hole 1a exceeds 3 mm, and the interior plate 3 is arranged inside the exterior plate 1 so as not to be exposed to the outside. Therefore, when the porous sound absorbing structure 10 is actually used, the clogging is hardly generated in the through holes 1a and 3a, and the constraint on the size of the diameter φ1 caused by the drainage and painting which are of other functions of the exterior plate 1 can be eliminated. Accordingly, the sound absorbing performance is hardly degraded while the frequency band of the noise absorbed by the interior plate 3 of the porous sound absorbing structure 10 is widened. Because the aperture ratio β1 of the through hole 1a in the exterior plate 1 exceeds 3% while the diameter φ1 of the through hole 1a exceeds 3 mm, even in an environment in which the diameter φ1 of the through hole 1a in the exterior plate 1 cannot relatively be decreased, the porous sound absorbing structure 10 which securely exerts the sufficient sound absorbing performance in the wide frequency band can be obtained.

The aperture ratio β2 of the interior plate 3 becomes not more than 3%, which enables the porous sound absorbing structure 10 to have the sufficient sound absorbing performance. The number of through holes 3a can be decreased in the interior plate 3, so that the production time of the interior plate 3 can be shortened to reduce the production cost. The diameter φ2 of the through hole 3a in the interior plate 3 is set not more than 3 mm, which allows the rapid decrease in acoustic absorption coefficient to be suppressed in the porous sound absorbing structure 10. Therefore, the frequency band of the noise absorbed by the porous sound absorbing structure 10 can further be widened.

### [Second Embodiment]

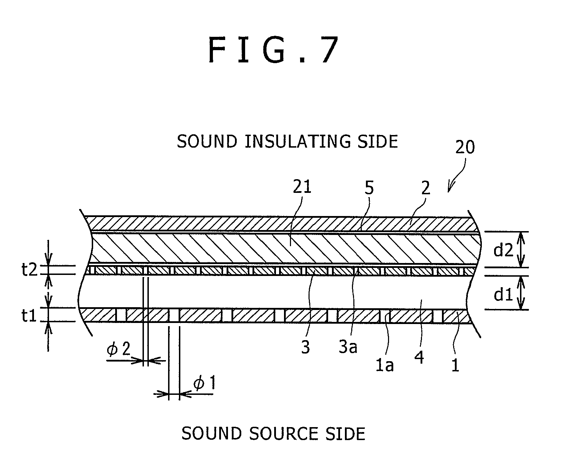

Fig. 7 is a transverse sectional view showing a porous sound absorbing structure according to a second embodiment of the present invention. As shown in Fig. 7, a porous sound absorbing structure 20 of the second embodiment has the substantially same configuration as the porous sound absorbing structure 10 of the first embodiment except that a glass wool (sound absorbing material) 21 is arranged in the air layer 5 of the porous sound absorbing structure 10 of the first embodiment. In Fig. 7, the same component as the first embodiment is designated by the same numeral, and the description will be omitted.

In the second embodiment, although the glass wool 21 is provided in the air layer 5, for example, the sound absorbing material made of the metal fiber, the foam metal and resin metal thin film or the metal thin film, or the non-oven cloth may be provided in the air layer 5. The glass wool 21 may be provided not only in the air layer 5 but in the air layer 4, or the glass wool 21 may be provided only in the air layer 4. The glass wool 21 is provided in the air layer 5, and thereby the air vibration passing through the through holes 1a and 3a of the exterior plate 1 and interior plate 3 is further damped by the glass wool 21. That is, the air vibration damped by the viscous damping effect is further damped by the glass wool 21 when the air vibration passes through the through hole 3a in the interior plate 3.

The substantially same effects as the porous sound absorbing structure 10 of the first embodiment can also be obtained in the porous sound absorbing structure 20 of the second embodiment. Because the sound absorbing effect by the glass wool is added to the porous sound absorbing structure 20, the sound absorbing performance is improved compared with the porous sound absorbing structure 10 of the first embodiment.

### [Third Embodiment]

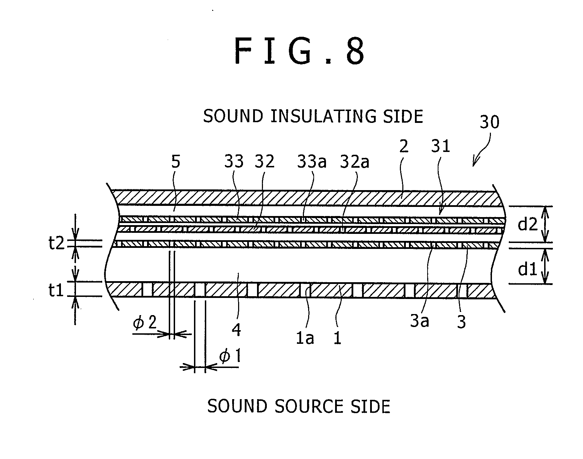

Fig. 8 is a transverse sectional view showing a porous sound absorbing structure according to a third embodiment of the present invention. As shown in Fig. 8, a porous sound absorbing structure 30 of the third embodiment has the substantially same configuration as the porous sound absorbing structure 10 of the first embodiment except that multiple thin films 31 are arranged so as to vertically partition the air layer 5 of the porous sound absorbing structure 10 of the first embodiment. In Fig. 8, the same component as the above-described embodiments is designated by the same numeral, and the description will be omitted.

In the multiple thin films 31, two thin films 32 and 33 are laminated while being adjacent to each other. Many through holes 32a and 33a are made in the thin films 32 and 33 respectively, and the through holes 32a and 33a have the same aperture ratios and diameters as the interior plate 3. As shown in Fig. 8, the through holes 32a and 33a in the two thin films 32 and 33 are made while not overlapped to each other when viewed from a direction in which the thin films 32 and 33 are laminated. That is, the through holes 32a and 33a in the thin films 32 and 33 are made at the positions where the through holes 32a and 33a opposed to each other are not overlapped to each other. The metal thin film such as aluminum foil and the resin thin film such as vinyl chloride can be used as the two thin films 32 and 33 of the multiple thin films 31. However, the thin films 32 and 33 of the multiple thin films 31 are not limited to the particular material.

Thus, when the multiple thin films 31 are provided in the air layer 5, the two thin films 32 and 33 of the multiple thin films 31 are vibrated by the air vibration passing through the through holes 1a and 3a in the exterior plate 1 and interior plate 3, and thereby the two thin films 32 and 33 are brought into contact with each other and rubbed together to damp the air vibration. That is, the air vibration which is damped by the viscous damping effect passing through the through hole 3a of the interior plate 3 is further damped by the multiple thin films 31. Because the through holes 32a and 33a are made in the two thin films 32 and 33 while not overlapped to each other, the air vibration flowing into the air layer 5 passes through the through hole 32a in the thin film 32. Then, the air vibration passes between the thin films 32 and 33, and the air vibration passes through the through hole 33a in the thin film 33. That is, because the air vibration propagates along the inner surfaces of the two thin films 32 and 33, the sound absorbing effect is further exerted by combining the damping effect in the passage of the air vibration through the through holes 32a and 33a and the viscous damping effect in the propagation of the air vibration through the surfaces of the thin films 32 and 33. Furthermore, because the multiple thin films 31does not depend on the frequency band of the absorbed noise, the noise of the wide frequency band is effectively damped.

The substantially same effects as the porous sound absorbing structure 10 of the first embodiment can also be obtained in the porous sound absorbing structure 30 of the third embodiment. Because the sound absorbing effect by the multiple thin films 31 is added to the porous sound absorbing structure 30, the sound absorbing performance is improved compared with the porous sound absorbing structure 10 of the first embodiment.

Although the multiple thin films 31 including the two thin films 32 and 33 in which the through holes 32a and 33a are made are applied in the porous sound absorbing structure 30, the multiple thin films including the thin films in which the through holes 32a and 33a are not made may be applied. Therefore, as described above, the thin films are brought into contact with each other and rubbed together to damp the air vibration. The multiple thin films may be formed by one thin film, or the multiple thin films may be formed by at least three thin films. Therefore, the air vibration can further be damped to improve the sound absorbing effect.

### [Fourth Embodiment]

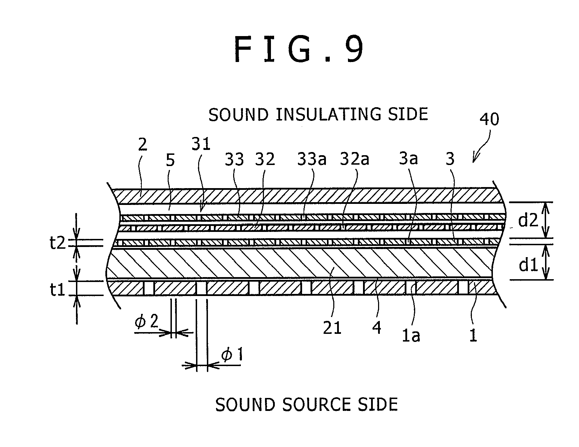

Fig. 9 is a transverse sectional view showing a porous sound absorbing structure according to a fourth embodiment of the present invention. As shown in Fig. 9, a porous sound absorbing structure 40 of the fourth embodiment has the substantially same configuration as the porous sound absorbing structure 30 of the third embodiment except that the glass wool 21 are arranged in the air layer 4 of the porous sound absorbing structure 30 of the third embodiment. In Fig. 9, the same component as the above-described embodiments is designated by the same numeral, and the description will be omitted.

The glass wool 21 is arranged in the air layer 4 and the multiple thin films 31 are arranged in the air layer 5, so that the air vibration passing through the through hole 1a in the exterior plate 1 is damped by the glass wool 21, the air vibration damped by the glass wool 21 is further damped when the air vibration passes through the through hole 3a in the interior plate 3, and the air vibration damped by the glass wool 21 and the through hole 3a in the interior plate 2 is further damped by the multiple thin films 31.

According to the porous sound absorbing structure 40 of the fourth embodiment, the effects of the porous sound absorbing structures 10, 20, and 30 of the first to third embodiments can be obtained, the sound absorbing effect is improved in the combination with the effects, and the frequency band of the absorbed noise is widened in the porous sound absorbing structure 40.

The porous sound absorbing structures 10, 20, 30, and 40 of the first to fourth embodiments can also be applied to a region where the conventional sound absorbing member is used. For example, the porous sound absorbing structures 10, 20, 30, and 40 of the first to fourth embodiments are used are used as a structure panel of a soundproof fence which realizes both the inside sound absorption and the outside sound insulation for various noise sources such as a motor and a gear. The porous sound absorbing structures 10, 20, 30, and 40 of the first to fourth embodiments are also used as the sound absorbing plate in a hall and a living room.

### [Fifth Embodiment]

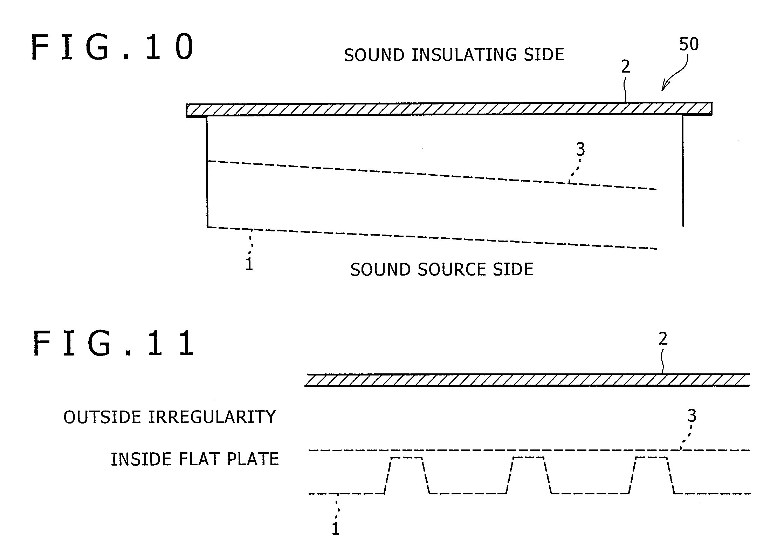

Fig. 10 is a transverse sectional view showing a porous sound absorbing structure according to a fifth embodiment of the present invention. In the porous sound absorbing structure 50 of the fifth embodiment, as shown in Fig. 10, while the flat exterior plate 1 and interior plate 3 are inclined with respect to the closing plate 2, drain holes are made in lower portions of the inclinations. Other portions of the porous sound absorbing structure 50 of the fifth embodiment are substantially similar to the porous sound absorbing structure 10 of the first embodiment. In Fig. 10, the same component as the above-described embodiments is designated by the same numeral, and the description will be omitted.

Thus, according to the porous sound absorbing structure of the fifth embodiment, the water can effectively be collected and drained. Additionally, the painting can effectively be collected and discharged when the porous sound absorbing structure is coated with paint. As a result, the decrease in sound absorbing material can further be suppressed in the multi-hole plate.

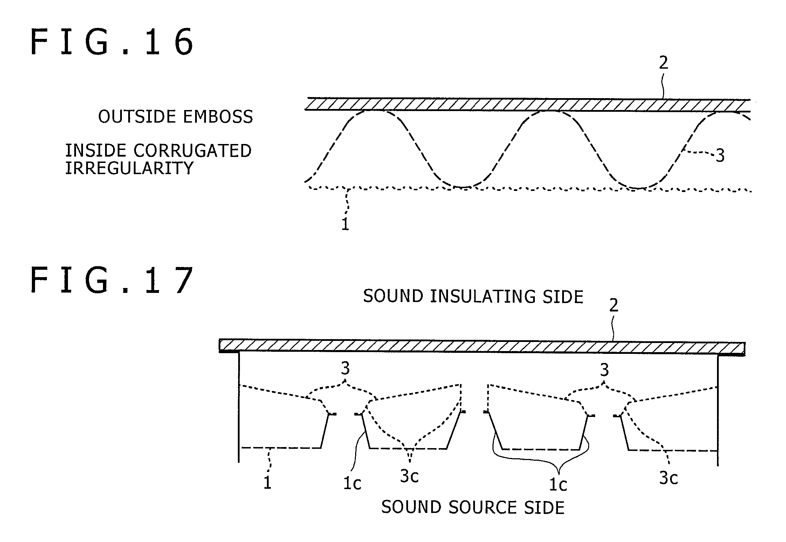

It is not always necessary that the exterior plate 1 and the interior plate 3 be evenly inclined, and the number of drain holes is not limited to one. For example, in one of modifications of the fifth embodiment, as shown in Fig. 17, inclination orientations of the interior plate 3 are alternately changed, and the plural drain holes are provided in the lower portion of the inclination.

The preferred embodiments of the present invention are described above. However, the present invention is not limited to the above embodiments, but various design changes could be made without departing from the scope of claims. For example, in the exterior plate 1 in the porous sound absorbing structures 10, 20, 30, 40, and 50 of the first to fifth embodiments, the aperture ratio β1 exceeds 3% and the diameter of the through hole 1a exceeds 3 mm. However, one of the two conditions may be satisfied in the exterior plate 1 of the porous sound absorbing structures 10, 20, 30, 40, and 50. The aperture ratio β2 may exceed 3% in the interior plate 3. The diameter φ2 may exceed 3 mm in the through hole 3a of the interior plate 3. The plural interior plates 3 may be arranged between the exterior plate 1 and the closing plate 2 while being adjacent to one another, which allows the viscous damping effect to be improved in the through hole of the interior plate to enhance the sound absorbing performance of the porous sound absorbing structure.

The exterior plate 1, the closing plate 2, and the interior plate 3 in the above embodiments are formed in the rectangular flat shape. However, for example, the exterior plate 1, the closing plate 2, and the interior plate 3 may be formed in a circular shape, an elliptic plane, or a triangular plane. Preferably the irregularities are formed in the exterior plate 1, the closing plate 2, and the interior plate 3, because the irregularity has the effect of enhancing the rigidity. When the irregularities are formed in the exterior plate 1, the closing plate 2, and the interior plate 3, the air layers can be provided among the exterior plate 1, the closing plate 2, and the interior plate 3 only by overlapping the exterior plate 1, the closing plate 2, and the interior plate 3 to one another. The exterior plate 1 and the interior plate 3 may be formed not in the flat plates but in the thin films. For example, the metal thin film such as aluminum foil and the resin thin film such as vinyl chloride can be applied to the exterior plate 1 and the interior plate 3. The closing plate 2 may be formed in an annular shape in section.

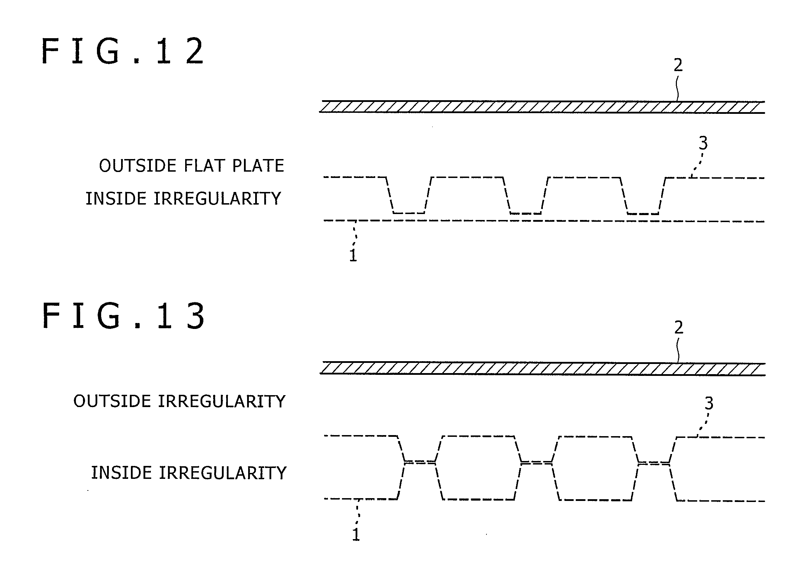

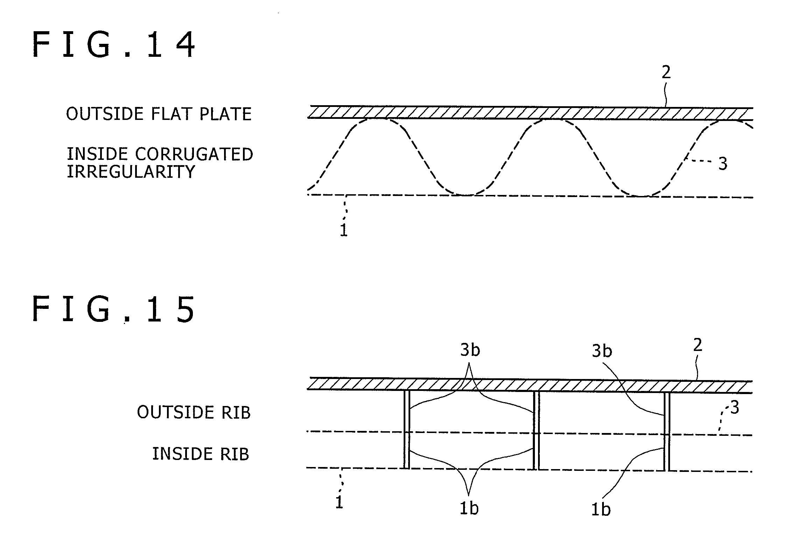

For example, Figs. 11 to 17 are explanatory views showing modifications of the exterior plate 1 and the interior plate 3 in the embodiments. Fig. 11 shows a state in which irregularity is formed in the exterior plate 1, Fig. 12 shows a state in which the irregularity is formed in the interior plate 3, Fig. 13 shows a state in which the irregularity is formed in the exterior plate 1 and the interior plate 3, Fig. 14 shows a state in which a corrugated irregularity is formed in the interior plate 3, Fig. 15 shows a state in which an outside rib 1b and an inside rib 3b are provided in the exterior plate 1 and the interior plate 3 and the irregularities are formed in the exterior plate 1 and the interior plate 3 respectively, Fig. 16 shows a state in which the corrugated irregularity is formed in the interior plate 3 and the emboss is provided in the exterior plate 1 while the irregularity is formed in the exterior plate 1, and Fig. 17 shows a state in which the irregularities are formed in the exterior plate 1 and the interior plate 1 when the interior plate 3 is inclined.

The inside member may be made of a water-repellent material containing at least one of silicon and fluorine, or a surface of the inside member is coated with a water-repellent material containing at least one of silicon and fluorine.

Therefore, even if the rainwater or the like reaches the interior member, the rainwater or the like is effectively removed from the surroundings of the through hole, so that the rainwater or the like can be prevented from adhering to the surroundings of the through hole. As a result, the clogging can further be suppressed in the through hole.

In the conventional porous soundproof structure, because the interior plate is exposed onto the sound source side, there is a possibility that the clogging is generated in the through hole by the rainwater, dust, and the like which pass through the hole of the second exterior member to adhere to the interior member. Accordingly, even if the rainwater or the like reaches the interior member, the adhesion of the rainwater, the dust, and the like to the interior member can further be suppressed when the surface of the interior member has the water repellency. In this case, it is particularly necessary that the interior member surface including the inner surface of the hole have the water repellency. When the interior member surface including the inner surface of the hole has the water repellency, even if the rainwater or the like reaches the interior member, the rainwater can be prevented from invading into the hole. On the other hand, when the interior member surface including the inner surface of the hole does not have the water repellency, the rainwater or the like is sucked into the hole by capillary force, which results in the clogging.

As used herein, "having the water repellency" shall mean that a contact angle becomes more than 90° when a water droplet is caused to fall on the surface of the member. The contact angle more than 90° means that the state in which the surface of member is in contact with the water is more unstable than the state in which the surface of the member is exposed to atmospheric air. On the contrary, the contact angle lower than 90° means that the state in which the surface of member is in contact with the water is more stable than the state in which the surface of the member is exposed to the atmospheric air. In order to suppress the invasion of the rainwater or the like into the hole of the interior member, the contact angle is not lower than 90°, preferably not lower than 100°, more preferably not lower than 110°.

In order that the interior member surface including the inner surface of the hole has the water repellency, the interior member may be made of the material having the water repellency, or the surface of the metal member such as aluminum may be applied or coated with the material having the water repellency. A material having a poly-alkyl siloxane structure represented by silicone resin, a silane compound having an organic functional group bonded to a silicon atom represented by silane coupling agent through a carbon atom, a material having a fluorohydrocarbon structure represented by fluororesin, a fluoro-silane coupling agent in which a carbon fluoride chain is introduced to the silane coupling agent, and mixtures thereof can be applied to the material having the practical water repellency include. These compounds can solely be used, or the compounds can be used while at least two compounds are mixed together. These compounds may be applied as the water-repellent material by mixing the compound in another vehicle which does not contain the silicon and fluorine as long as the contact angle can be maintained not lower than 90° between the water and the interior member.

### INDUSTRIAL APPLICABILITY

As described above, according to the present invention, the aperture ratio of the second outside member exceeds 3%, which promotes the conversion of the air vibration into the heat energy by the viscous effect of the through hole in the inside member, and the sufficient sound absorbing performance can be exerted in the wide frequency band. Because the aperture ratio of the second outside member becomes not more than 50%, the rigidity of the second outside member can be secured to some extent.

## Claims

1. A porous sound absorbing structure in which a first outside member and at least one inside member are arranged while opposed to each other, many through holes being made along a flat plane in the inside member, and a plate thickness of said inside member and a diameter and an aperture ratio of the through hole are set so as to generate an viscous effect in air passing through said through hole, the porous sound absorbing structure **characterized in that** a second outside member is arranged while opposed to said inside member, said second outside member being located on the side opposite to said first outside member with respect to said inside member, many through holes being made along the flat plane in said second outside member, and the aperture ratio of the through hole in said second outside member is more than 3% and not more than 50%.

2. A porous sound absorbing structure in which a first outside member and at least one inside member are arranged while opposed to each other, many through holes being made along a flat plane in the inside member, and a plate thickness of said inside member and a diameter and an aperture ratio of the through hole are set so as to generate an viscous effect in air passing through said through hole, the porous sound absorbing structure **characterized in that** a second outside member is arranged while opposed to said inside member, said second outside member being located on the side opposite to said first outside member with respect to said inside member, many through holes being made along the flat plane in said second outside member, and the diameter of the through hole in said second outside member exceeds 3 mm.

3. A porous sound absorbing structure in which a first outside member and at least one inside member are arranged while opposed to each other, many through holes being made along a flat plane in the inside member, and a plate thickness of said inside member and a diameter and an aperture ratio of the through hole are set so as to generate an viscous effect in air passing through said through hole, the porous sound absorbing structure **characterized in that** a second outside member is arranged while opposed to said inside member, said second outside member being located on the side opposite to said first outside member with respect to said inside member, many through holes being made along the flat plane in said second outside member, the aperture ratio of the through hole in said second outside member is more than 3% and not more than 50%, and the diameter of the through hole in said second outside member exceeds 3 mm.

4. A porous sound absorbing structure which includes:
a first outside member;
a second outside member which is arranged while opposed to said first outside member, many through holes being made along a flat plane in said second outside member; and
at least one inside member which is arranged while opposed to said first outside member and said second outside member such that said inside member is located between said first outside member and said second outside member, many through holes being made along the flat plane in said second outside member,
the porous sound absorbing structure **characterized in that** a plate thickness of said inside member and a diameter and an aperture ratio of the through hole are set so as to generate an viscous effect in air passing through said through hole, and the aperture ratio of the through hole in said second outside member is more than 3% and not more than 50%.

5. A porous sound absorbing structure which includes:
a first outside member;
a second outside member which is arranged while opposed to said first outside member, many through holes being made along a flat plane in said second outside member; and
at least one inside member which is arranged while opposed to said first outside member and said second outside member such that said inside member is located between said first outside member and said second outside member, many through holes being made along the flat plane in said second outside member,
the porous sound absorbing structure **characterized in that** a plate thickness of said inside member and a diameter and an aperture ratio of the through hole are set so as to generate an viscous effect in air passing through said through hole, and the diameter of the through hole in said second outside member exceeds 3 mm.

6. A porous sound absorbing structure which includes:
a first outside member;
a second outside member which is arranged while opposed to said first outside member, many through holes being made along a flat plane in said second outside member; and
at least one inside member which is arranged while opposed to said first outside member and said second outside member such that said inside member is located between said first outside member and said second outside member, many through holes being made along the flat plane in said second outside member,
the porous sound absorbing structure **characterized in that** a plate thickness of said inside member and a diameter and an aperture ratio of the through hole are set so as to generate an viscous effect in air passing through said through hole, the aperture ratio of the through hole in said second outside member is more than 3% and not more than 50%, and the diameter of the through hole in said second outside member exceeds 3 mm.

7. The porous sound absorbing structure as in any of claims 1 to 6, **characterized in that** the aperture ratio of the through hole in said inside member is not more than 3%.

8. The porous sound absorbing structure as in any of claims 1 to 7, **characterized in that** the diameter of the through hole in said inside member is not more than 3 mm.

9. The porous sound absorbing structure as in any of claims 1 to 8, **characterized in that** air layers are formed between said first outside member and said inside member and between said inside member and said second outside member respectively, and a sound absorbing material is arranged in at least one of said air layers.

10. The porous sound absorbing structure as in any of claims 1 to 8, **characterized in that** air layers are formed between said first outside member and said inside member and between said inside member and said second outside member respectively, a sound absorbing material made of a resin of metal thin film is arranged in at least one of said air layers, many through holes being made in said sound absorbing material, the aperture ratio of the through hole of said thin film is not more than 3%, and the diameter of the through hole of said thin film is not more than 3 mm.

11. The porous sound absorbing structure as in any of claims 1 to 10, **characterized in that** at least one of said second outside member and said inside member is inclined with respect to a horizontal plane.

12. The porous sound absorbing structure as in any of claims 1 to 11, **characterized in that** a drain hole is made in a lower portion of at least one of said second outside member and said inside member.

13. The porous sound absorbing structure as in any of claims 1 to 12, **characterized in that** said inside member is made of a water-repellent material containing at least one of silicon and fluorine, or a surface of said inside member is coated with a water-repellent material containing at least one of silicon and fluorine.

14. The porous sound absorbing structure as in any of claims 1 to 13, **characterized in that** at least one of said first outside member, said second outside member, and said inside member is formed so as to have an irregular shape.
